# EUROPEAN PATENT APPLICATION

(11) **EP 1 445 927 A1**
(43) Date of publication of application: **11.08.2004**
(21) Application number: 03002400.4
(22) Date of filing: 04.02.2003
(51) Int. Cl.: H04M 3/487, H04M 15/00, H04M 7/00

(54) **Method and apparatus for call connections being free of charge depending on preselected advertisement announcement**

(71) Applicant: SIEMENS AKTIENGESELLSCHAFT, 80333 München (DE)
(72) Inventor: Saridaki, Eleni, 14451 Metamorfosi (GR)

(57) **Abstract**

The present invention comprises a method and apparatus means for use in a telecommunication network in which a call connection established between a calling party (Sub A) and at least one called party (Sub B) is free of charge in the case that an advertisement announcement is played to the calling party (Sub A) prior to completing the call connection. The content of the advertisement announcement is dependant on product interests of the calling party (Sub A) which are selected by the calling party (Sub A) and registered in a database (DB) belonging to the telecommunication network.

## Description

The present invention relates to a method and apparatus means for use in a telecommunication network in which a call connection established between a calling party and at least one called party is free of charge in the case that an advertisement announcement is played to the calling party prior to completing the call connection.

### BACKROUND OF INVENTION

This invention is used in the telecommunications field and refers to the enhancement of the Internet Freephone use via a PC (Personal Computer) and to a greater variety of offered services by the provider.

The present situation is dominated by the Intelligent Networks freephone service. In addition, an Internet Freephone access is already available.

### SUMMARY OF INVENTION

The present invention aims to provide a method and apparatus means for use in a telecommunication network which improves the known freephone procedure.

Said problems are solved by the features mentioned in the independant claims. Preferred embodiments of the invention are described in the dependant claims.

The invention proposed hereafter is an enhancement of the well-known Intelligent Networks' Freephone service already in extensive use worldwide either via PSTN (Public Switch Telephone Network) telephony or recently via Internet sites.

This extension will allow the enterprises that owns the freephone numbers to meet better their customers needs via tailor-made advertisements and routing to destinations that are more likely to serve their interests. The basic innovation is the filling of an interest form in the Internet that allows the call further handling & completion based on the personal data of the user and his wishes each time he/she uses the service.

The change implemented to the above features concerns the possibility of diversifying the call to different directions so that the Internet user takes the exact information he needs. At the home page of Internet Freephone the client can find a group of companies and a registration form in which he completes his age, his interests, his gender and his phone number. Optionally he can fill his name or stay anonymous. After the selection of his product's preference, the form is stored in a database by an application server. According to the elements of that form the application server establishes an announcement to the leg of the calling user via a Media Gateway controller. After the connection of the other leg to the called user, the call is established and the two parties can talk.

This proposal offers the enhancement of the service with announcements and the registration form dependant routing of the call, which becomes possible due to the new voice over IP technology.

The important innovation factor of the Internet Advertisement Dependent Freephone is the flexibility it introduces to the already well-established service Freephone, that has already been enhanced with Internet access. The end-user is able to access a web site extended with the service (e.g. an e-shop) and talk to the expert of his region according to the information he seeks, while listening to an advertisement that matches his/her profile/interests. Thus three extra functions (origin and expertise dependent routing as well as end-user's interest based advertising) are added to the already existing functionality of Internet Freephone.

This invention could be used in conjunction to any e-business application as an add-on feature, since it provides the end-user gets with the needed information easily, fast and effectively.

### BRIEF DESCRIPTION OF THE DRAWINGS

Preferred embodiments of the present invention will now be described with reference to the accompanying drawing in which:
Figure 1 displays the Internet Advertisement Dependent Freephone service as would be implemented based on the technology used in the product "SURPASS" of the company Siemens AG.
Figure 2 shows an example of the Internet Advertisement Dependent Freephone service application form.

### DETAILLED DESCRIPTION OF THE DRAWINGS

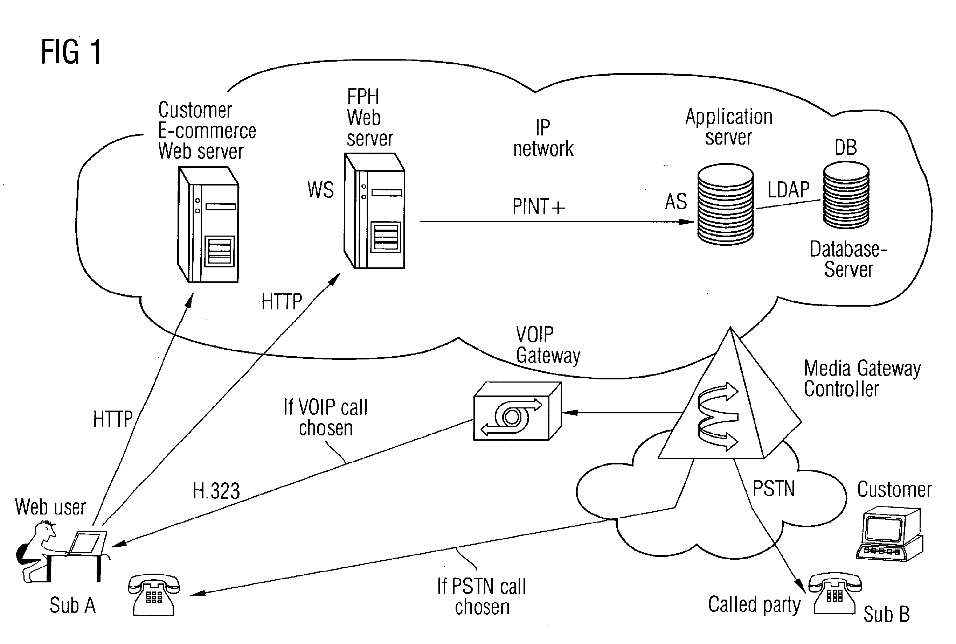

Figure 1 shows communication networks as an IP network and an PSTN network including short description. The IP network comprises different servers as a E-commerce Web server, an Freephone (FPH) Web server WS, an application server AS and a Database server DB. The PSTN network comprises a Media Gateway Controller and an interface to the IP network implemented as a VOIP (Voice over IP) Gateway. Furthermore there are two parties or subscribers Sub A and Sub B using a freephone service, that means a call connection between them is established and free of charge in the case that the party Sub A listens to an advertisement announcement according to his/her choice. It is possible to establish said free phone connection among more than two parties, comparable with a telephone conference. The message flow among the above mentioned network elements is indicated by dot lines with arrows.

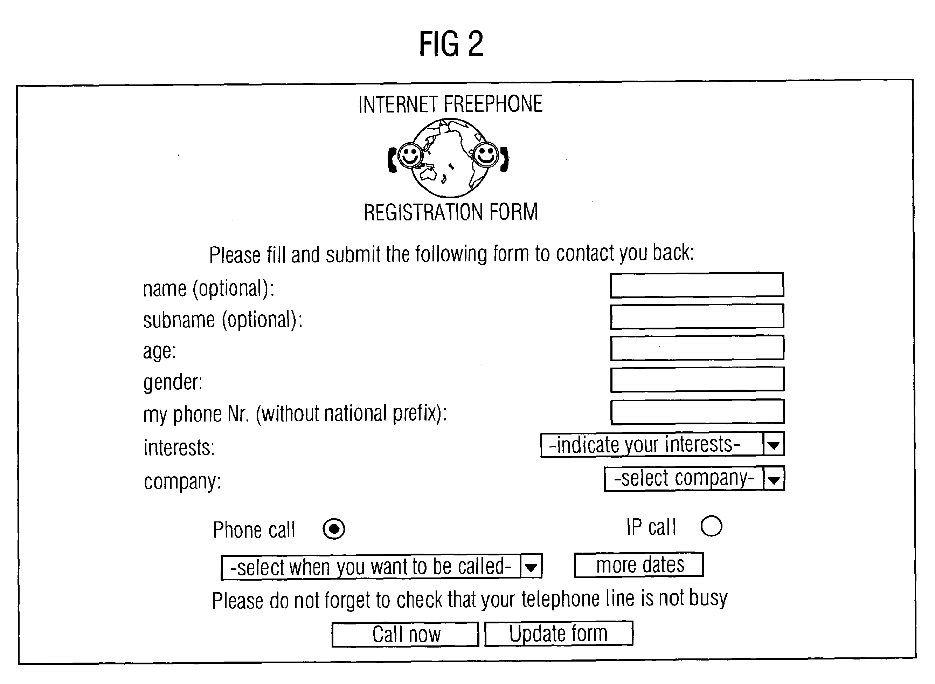

Figure 2 depicts an application or registration form in which the calling party Sub A fills his subscriber data, particulary his/her product interests about which he/she wishes to be informed by advertisement announcement. There is an separate field in the registration form to fill in the interests.

### An example of that invention could be the following:

A Company selling telecommunication products, such as cellphones, and other electronic equipment or home appliances could early recognize the preference of its client according to his registration form. Someone who wants a cellphone shall be routed to the proper department of the mobile applications, or another, who needs to buy a PC, will be connected elsewhere. Freephone origin dependent routing will also apply in this case. At the same time an advertisement is applied to client concerning the product of his interest.

The Internet Advertisement Dependent Freephone is actually an enhancement of an existing telecommunication Intelligent Network service.

This invention requires an established Voice over IP network base e.g. the product "Surpass" of the company Siemens AG. In more detail the following network components, as shown in figure 1, are needed for a Internet Freephone application:
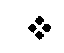 A Media Gateway controller, interconnected via SS7 to PSTN
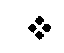 A Media Gateway, that will serve VoIP call establishment
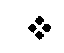 A Web server that will host the site with the service's user interface
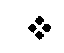 An Application server (Open Service Platform OSP) that executes the service logic
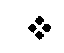 An LDAP (Lightweight Directory Access Protocol) that will have stored the subscriber preferences per E.164 number.

The implementation of the Internet Advertisement Dependent Freephone requires adaptation in the following network elements that are shown in figure 1:
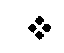 The Web server that will host the site with the service's user interface needs extension for the introduction of the application form in the system. The gathered relevant information will be transmitted to the OSP via SIP(PINT).
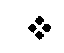 The OSP that should create, modify and have query functions for the calling party's preference data, so that the relevant destination is determined. Local OSP database should be enhanced with the corresponding destination criteria and an LDAP interface that is not implemented currently for the direct connection to the LDAP server.
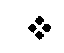 The LDAP server that should have a database that includes the subscriber data and that will be created anew for the needs of this service.

## Claims

1. Method for use in a telecommunication network in which a call connection established between a calling party (Sub A) and at least one called party (Sub B) is free of charge in the case that an advertisement announcement is played to the calling party (Sub B) prior to completing the call connection, wherein the content of the advertisement announcement is dependant on product interests of the calling party (Sub A) which are selected by the calling party (Sub A) and registered in a database (DB) belonging to the telecommunication network.

2. Method according to claim 1, wherein a call connection is established from an application server playing the advertisement announcement to the calling party (Sub A) prior to completing the call connection among the parties.

3. Method according to claim 1 or 2, wherein an application form containing the product interests filled in by the calling party (Sub A) is evaluated for the call connection with the application server (AS).

4. A Web server (WS) within a telecommunication network which is suitable for using the method according to claim 3, wherein the Web server (WS) provides means for the application form containing a variety of product interests which can be selected by the calling party (Sub A).

5. An application server within a telecommunication network which is suitable for using the method according to claim 2, wherein the application server (AS) provides means for the call connection to the calling party (Sub A) in order to play the advertisement announcement.

6. A Database (DB) within a telecommunication network which is suitable for using the method according to any one of the previous claims, wherein the database provides means for storing subscriber data enabling matching the selected product interests with the address of an application server providing the advertisement announcement fitting to the selected product interests.
